# EUROPEAN PATENT APPLICATION

(11) **EP 4 361 717 A1**
(43) Date of publication of application: **01.05.2024**
(21) Application number: 22828791.8
(22) Date of filing: 23.06.2022
(51) Int. Cl.: G02F 1/139, G02B 5/30, G02B 1/08, G02F 1/1335, G02F 1/13363

(54) **OPTICAL LAMINATE AND MANUFACTURING METHOD THEREFOR, SMART WINDOW COMPRISING SAME, AND WINDOW AND DOOR FOR VEHICLE AND BUILDING, HAVING SAME APPLIED THERETO**

(30) Priority: 24.06.2021 KR 20210082379
(71) Applicant: Dongwoo Fine-Chem Co., Ltd., Iksan-si, Jeollabuk-do 54631 (KR)
(72) Inventor: KIM, Dong-Hwi, Sejong 30100 (KR); KIM, Sung-Su, Pyeongtaek-si, Gyeonggi-do 17802 (KR)
(74) Representative: Betten & Resch
(86) International application number: PCT/KR2022/008950
(87) International publication number: WO 2022/270944

(57) **Abstract**

The present invention relates to a variable transmittance optical laminate and a manufacturing method therefor, a smart window comprising same, and a window and a door for a vehicle and a building, having same applied thereto, the variable transmittance optical laminate comprising: a first polarizing plate; a first transparent conductive layer formed on one surface of the first polarizing plate; a second polarizing plate facing the first polarizing plate; a second transparent conductive layer formed on one surface of the second polarizing plate and facing the first transparent conductive layer; and a liquid crystal layer provided between the first transparent conductive layer and the second transparent conductive layer, wherein the liquid crystal layer is driven by a twisted nematic (TN) mode, at least one transparent conductive layer among the first transparent conductive layer and the second transparent conductive layer is formed so as to make direct contact with the first polarizing plate or the second polarizing plate, and at least one polarizing plate among the first polarizing plate and the second polarizing plate comprises a polarizer and a first optical functional film formed on one surface of the polarizer, wherein the first optical functional film has an in-plane retardation (Rin) of 40-100 nm and a thickness-direction retardation (Rth) of 120-210 nm.

## Description

### Technical Field

The present disclosure relates to a variable transmittance optical stack, a manufacturing method therefor, a smart window including the same, and a window and a door for a vehicle and a building having the same applied thereto.

### Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing a transmittance of light when a voltage is applied has been developed.

The variable transmittance optical stack is driven by changing the transmittance by driving liquid crystal according to application of voltage. The variable transmittance optical stack developed so far is manufactured by patterning a conductive layer for driving liquid crystal on a separate or additional substrate, and then combining the conductive layer with other elements such as a polarizing plate.

For example, Japanese Patent Publication Application No. 2018-010035 discloses a variable transmittance optical stack including a transparent electrode layer formed on a polycarbonate (PC) substrate having a predetermined thickness.

However, when a separate or additional substrate is included to form the conductive layer as described above, as a manufacturing process becomes complicated, manufacturing costs is increased, the thickness of the stack is increased, and the transmittance is changed due to occurrence of retardation.

Accordingly, there is a need to develop a variable transmittance optical stack capable of simplifying a manufacturing process, reducing the thickness by not including a separate or additional substrate for forming a conductive layer.

### Disclosure

### Technical Problem

The present disclosure is intended to provide a variable transmittance optical stack having a simplified manufactured process by not including a separate or additional substrate for forming a conductive layer.

Another objective of the present disclosure is to provide a variable transmittance optical stack in which the thickness is significantly reduced by not including a separate or additional substrate for forming a conductive layer.

Yet another objective of the present disclosure is to adjust retardation and refractive index of an optical functional film to efficiently control obliquely incident light.

Still another objective of the present disclosure is to provide a smart window including a variable transmittance optical stack, and a window and a door for a vehicle or a building, to which the same is applied.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack including: a first polarizing plate; a first transparent conductive layer formed on one surface of the first polarizing plate; a second polarizing plate opposing the first polarizing plate; a second transparent conductive layer formed on one surface of the second polarizing plate, and opposing the first transparent conductive layer; and a liquid crystal layer provided between the first transparent conductive layer and the second transparent conductive layer. The liquid crystal layer is driven in a twisted nematic (TN) mode. At least one transparent conductive layer of the first transparent conductive layer and the second transparent conductive layer is formed by directly contacting with the first polarizing plate or the second polarizing plate. At least one polarizing plate of the first polarizing plate and the second polarizing plate includes a polarizer and a first optical functional film formed on one surface of the polarizer. The first optical functional film has in-plane retardation Rᵢₙ from 40nm to 100nm, and thickness-directional retardation Rₜₕ from 120nm to 210nm.

In the first aspect of the present disclosure, the variable transmittance optical stack may include a second optical functional film provided on one surface of the first optical functional film.

In the second aspect of the present disclosure, at least one optical functional film of the first optical functional film and the second optical functional film may be a retardation film.

In the third aspect of the present disclosure, the second optical functional film may have a refractive index nx, ny, nz in an x, y, z axial direction that meets the relationship of nx=ny≥nz.

In the fourth aspect of the present disclosure, the second optical functional film may have a thickness-directional retardation Rₜₕ from 0 to 120nm.

In the fifth aspect of the present disclosure, at least one transparent conductive layer of the first transparent conductive layer and the second transparent conductive layer may be formed by directly contacting with the first polarizing plate or the second polarizing plate without a separate or additional substrate between the polarizing plate and the transparent conductive layer.

In the sixth aspect of the present disclosure, at least one transparent conductive layer of the first transparent conductive layer and the second transparent conductive layer may include a highly adhesive layer between the first polarizing plate or the second polarizing plate and the transparent conductive layer.

In the seventh aspect of the present disclosure, at least one polarizing plate of the first polarizing plate and the second polarizing plate may include at least one protective film.

In the eighth aspect of the present disclosure, the protective film may include one or more types selected from a group consisting of polyethylene terephthalate, polyethylene isophthalate, polyethylene naphthalate, polybutylene terephthalate, diacetyl cellulose, triacetyl cellulose, polycarbonate, polyethylene, polypropylene, polymethyl acrylate, polymethyl methacrylate, polyethyl acrylate, polyethyl methacrylate, and cyclic olefin polymer.

In the ninth aspect of the present disclosure, at least one polarizing plate of the first polarizing plate and the second polarizing plate may have a thickness from 30µm to 200µm.

In the tenth aspect of the present disclosure, at least one transparent conductive layer of the first transparent conductive layer and the second transparent conductive layer may include one or more types selected from a group consisting of transparent conductive oxide, metal, carbonaceous matters, conductive polymers, conductive ink, and nanowires.

In the eleventh aspect of the present disclosure, the liquid crystal layer may include one or more types selected from a group consisting of a ball spacer and a column spacer.

In the twelfth aspect of the present disclosure, the ball spacer may have a diameter of 1 to 10 µm.

In the thirteenth aspect of the present disclosure, the ball spacer may have an occupancy area in the liquid crystal layer from 0.01 to 10% of the area of the liquid crystal layer.

In the fourteenth aspect of the present disclosure, the variable transmittance optical stack may include a refractive index-matching layer having a refractive index from 1.4 to 2.6.

Furthermore, the present disclosure relates to a manufacturing method for the variable transmittance optical stack.

Furthermore, the present disclosure relates to a smart window including the variable transmittance optical stack.

Furthermore, the present disclosure relates to a vehicle in which the smart window is applied to at least one of a front window, a rear window, a side window, a sunroof window, and an inner partition thereof.

Furthermore, the present disclosure relates to a building window including the smart window.

### Advantageous Effects

The variable transmittance optical stack according to the present disclosure does not include a separate or additional substrate for forming the conductive layer as the conductive layer is directly formed on one surface of the polarizing plate, so that the thickness thereof may be significantly reduced in comparison to the thickness of the conventional optical stack.

Furthermore, the variable transmittance optical stack according to the present disclosure is configured to omit the process of forming a conductive layer on a substrate for the conventional optical stack and bonding the conductive layer and other members, so the manufacturing process thereof can be simplified in comparison to the conventional optical stack.

Furthermore, according to the variable transmittance optical stack according to the present disclosure, retardation (phase difference) and refractive index of the optical functional film are adjusted to efficiently control a transmittance of obliquely incident light, specifically, light that penetrates upper slope, and therefore, compared to the conventional optical stack, transmission of external light, specifically, light of the sun can be efficiently controlled.

### Description of Drawings

FIG. 1 is a view showing a stack structure of a variable transmittance optical stack according to an embodiment of the present disclosure.
FIG. 2 is a view showing a stack structure of a variable transmittance optical stack to which an optical film is coupled according to another embodiment of the present disclosure.
FIG. 3 is a view showing a stack structure of a variable transmittance optical stack to which an optical film is coupled according to another embodiment of the present disclosure.
FIG. 4 is a view showing a stack structure of a variable transmittance optical stack in which a pressure sensitive adhesive/adhesive according to another embodiment of the present disclosure is formed on one surface thereof.
FIG. 5 is a view showing a stack structure of a variable transmittance optical stack to which a protective film is coupled according to another embodiment of the present disclosure.
FIG. 6 is a view schematically showing steps of forming a polarizing plate according an embodiment of the present disclosure.
FIG. 7 is a stack structure of a variable transmittance optical stack to which a refractive index-matching layer is coupled according another embodiment of the present disclosure.
FIG. 8A is a view showing light leakage test process and result of a variable transmittance optical stack according to a first optical functional film according to an embodiment of the present disclosure. FIGS. 8B to 8Y are results showing that light leakage passing through the variable transmittance optical stack is efficiently blocked within a range of an in-plane retardation Rᵢₙ of 40nm to 100nm and a range of a thickness-directional retardation Rₜₕ from 120nm to 210nm.
FIG. 9A is a view showing light leakage test process and result of a variable transmittance optical stack according to a first optical functional film and a second optical functional film according to an embodiment of the present disclosure. FIGS. 9B to 9G are views showing that light leakage passing through the variable transmittance optical stack is efficiently blocked within a range of a thickness-directional retardation from 0 to 120nm.

### Best Mode

The present disclosure relates to a variable transmittance optical stack, the optical stack having a conductive layer for driving liquid crystal directly formed on one surface of a polarizing plate without a separate or additional substrate for forming the conductive layer, and being capable of efficiently controlling a transmittance of obliquely incident light by adjusting retardation of an optical functional film.

More specifically, the present disclosure relates to a variable transmittance optical stack including: a first polarizing plate; a first transparent conductive layer formed on one surface of the first polarizing plate; a second polarizing plate opposing the first polarizing plate; a second transparent conductive layer formed on one surface of the second polarizing plate, and opposing the first transparent conductive layer; and a liquid crystal layer provided between the first transparent conductive layer and the second transparent conductive layer. The liquid crystal layer is driven in a twisted nematic (TN) mode. At least one transparent conductive layer of the first transparent conductive layer and the second transparent conductive layer is formed by directly contacting with the first polarizing plate or the second polarizing plate. At least one polarizing plate of the first polarizing plate and the second polarizing plate includes a polarizer and a first optical functional film formed on one surface of the polarizer. The first optical functional film has in-plane retardation Rᵢₙ from 40nm to 100nm, and thickness-directional retardation Rₜₕ from 120nm to 210nm.

The variable transmittance optical stack of the present disclosure is particularly suitable for technical fields where a light transmittance can be changed in response to application of voltage, for example, may be used for a smart window.

The smart window is a window controlling the amount of light or heat passing through the window by changing a light transmittance in response to an electrical signal. In other words, the smart window is provided to be changed into a transparent, opaque or translucent state by voltage and is called variable transmittance glass, lighting control glass, or smart glass.

The smart window may be used as partitions for partitioning an internal space of vehicles and buildings or for protecting privacy, or as skylights arranged in openings of buildings, and may be used as highway signs, noticeboards, scoreboards, clocks or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since the transparent conductive layer is directly formed in the polarizing plate, there is no need to include a separate or additional substrate for forming the transparent conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a vehicle, or windows and doors for a building. Furthermore, the smart window may be used to not only an external light blocking use, but also an internal space partitioning use or a privacy protecting use such as an inner partition for a vehicle or a building.

### Mode for Invention

Hereinbelow, embodiments of the present disclosure will be described in detail with reference to drawings. However, the following drawings accompanied to this specification illustrate preferred embodiments of the present disclosure, and serve to further understand the technical idea of the present disclosure with the contents of the above-described invention. Therefore, the present disclosure should not be construed as being limited to materials described in the drawings.

Terms used in this specification are selected to describe embodiments and thus do not limit the present disclosure. In this specification, an element expressed in a singular form may be plural elements unless it is necessarily singular in the context.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", and "lower portion", and "above", "upper surface", and "upper portion" may be used to easily describe correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" with respect to another element may be placed "on" the another element. Accordingly, the exemplary term "below" may include both downward and upward directions. An element may be aligned in a different direction, and accordingly, the spatially relative terms may be interpreted according to orientation.

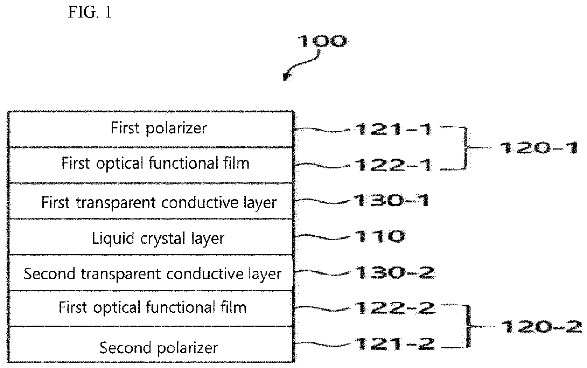

FIG. 1 is a view showing a stack structure of a variable transmittance optical stack 100 according to an embodiment of the present disclosure.

Referring to FIG. 1, according to the embodiment of the present disclosure, the variable transmittance optical stack 100 may include a liquid crystal layer 110, a first polarizing plate 120-1, a second polarizing plate 120-2, a first transparent conductive layer 130-1, and a second transparent conductive layer 130-2. The first polarizing plate 120-1 may include a first polarizer 121-1 and a first optical functional film 122-1, and the second polarizing plate 120-2 may include a second polarizer 121-2 and a first optical functional film 122-2. According to the embodiment of the present disclosure, a total light transmittance of the variable transmittance optical stack 100 may be changed in response to voltage application. For example, the optical stack 100 may have the total light transmittance ranging from 5% to 45% in response to voltage application.

The liquid crystal layer 110 is characterized to be driven in response to an electric field. The liquid crystal layer 110 may be located between the first polarizing plate and the second polarizing plate that are located in a light control region of the optical stack 100. According to the embodiment, the liquid crystal layer 110 may be located in a space provided by a sealant layer (not shown) and a spacer (not shown) provided between the first polarizing plate 120-1 and the second polarizing plate 120-2 in the light control region. Furthermore, the liquid crystal layer 110 may adjust a transmittance of light incident from an external light source in response to an electric field formed between the first transparent conductive layer 130-1 and the second transparent conductive layer 130-2.

The liquid crystal layer 110 is preferably driven in a twisted nematic (TN) mode in order to ensure ease of manufacturing and driving and a predetermined transmittance in the light blocking mode. The TN mode is a state in which polarizing axes of polarizing plates are perpendicular to each other, and liquid crystal exists in a twisted state from the first polarizing plate 120-1 to the second polarizing plate 120-2, and uses a perpendicular electric field.

According to another embodiment of the present disclosure, the liquid crystal layer 110 may include one or more types of spacers selected from a group consisting of a ball spacer and a column spacer, and specifically, it is preferable that the included spacer is a ball spacer. The ball spacer may include one or more ball spacers, and preferably has a diameter ranging from 1µm to 10µm. Furthermore, when viewed in a planar direction, a region where the ball spacer is occupied in the liquid crystal layer 110 (i.e., light control region) preferably ranges from 0.01 to 10% of the area of the liquid crystal layer 110 in an aspect of improvement of user's visibility and a transmittance in a light transmissive mode.

Furthermore, according to another embodiment of the present disclosure, the liquid crystal layer 110 may include a sealant layer formed at an outer part. The sealant layer is provided to couple the two different polarizing plates to each other, and may be located at an inactivate region, between the two different polarizing plates. Furthermore, the sealant layer may secure a space where the liquid crystal layer is provided between the two different polarizing plates with the spacer.

The sealant layer may include curable resins as base resins. As the base resins, UV curable resins or heat curable resins that are known to be usable for sealants in the art may be used. The ultraviolet curable resins may be polymers of UV curable monomers. The heat curable resins may be polymers of heat curable monomers.

As the base resins of the sealant, for example, acrylate-based resins, epoxy-based resins, urethane-based resins, phenol-based resins, or compounds of these resins. According to an embodiment, the base resins may be acrylate-based resins, and the acrylate-based resins may be polymers of acrylic monomers. For example, the acrylic monomers may be multifunctional acrylate. According to another embodiment, the sealant may include monomer substances in addition to the base resins. For example, the monomer substances may be monofunctional acrylate. In the specification, the monofunctional acrylate may mean compounds having one acryl group, and the multifunctional acrylate may mean compounds having two or more acryl group. The curable resins may be cured by UV irradiation and/or heating. The UV irradiation condition or heat condition may be performed appropriately within the scope that does not damage the objective of the present disclosure. In case of need, the sealant may include initiators, for example, optical initiators or heat initiators.

The sealant layer formed on the liquid crystal layer 110 may be formed in a method commonly used in the art and, for example, may be formed drawing a sealant at an outer portion of the liquid crystal layer (i.e., inactivate region) with a dispenser having a nozzle. Then, the optical stack of the present disclosure may be manufactured by bonding and curing another optical stack, etc., and curing of the sealant may be performed in an UV irradiation and/or heating method.

The first polarizing plate 120-1 and the second polarizing plate 120-2 may be located with the liquid crystal layer 110 located therebetween to face each other with opposite surfaces thereof. Furthermore, the first polarizing plate 120-1 and the second polarizing plate 120-2 may transmit sporadically incident in one direction, and may regulate the amount of light passing through the polarizing plate 120 by using polarization properties thereof to adjust a transmittance of the optical stack.

At least one polarizer of each of the first polarizing plate 120-1 and the second polarizing plate 120-2 may include a stretched polarizer, or may be formed into a stretched polarizing plate. According to an embodiment, the stretched polarizer may include a stretched polyvinyl alcohol (PVA)-based resin. The PVA-based resin may be PVA-based resin obtained by saponifying polyvinyl acetate resin. As the polyvinyl acetate-based resin, in addition to polyvinyl acetate that is homopolymer of vinyl acetate, vinyl acetate and a copolymer with other monomers that can be copolymerized with vinyl acetate. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin is denatured, and may be polyvinyl formal or polyvinyl acetal denatured into aldehyde.

Furthermore, at least one polarizing plate of the first polarizing plate 120-1 and the second polarizing plate 120-2 may include a coated polarizer. According to an embodiment, the coated polarizer may be formed of a composition for liquid crystal coating, and, at this point, the composition for liquid crystal coating may contain reactive liquid crystal compound, and dichroic dye.

The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may mean a compound having two or more polymerizable functional groups.

Therefore, as the reactive liquid crystal compound is used, the polarizer of a thin film shape with improved mechanical and thermal stability while maintaining optically anisotropic or dielectric permittivity property of liquid crystal may be formed.

The dichroic dye is a substance contained in the composition for liquid crystal coating to impart the polarization characteristic, and has a property in which absorbance in a direction of long axis of molecule and absorbance in a direction of short axis are different. The dichroic dye may be a dichroic dye currently developed or to be developed. For example, the dichroic dye may contain acridine dye, oxazine dye, cyanin dye, naphthalene dye, azo dye, anthraquinone dye, and the like may be used, and these may be used alone or in combination.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like may be used. Furthermore, the composition for liquid crystal coating may contain leveling agents, polymerization initiators, etc. within a range that does not deteriorate the polarization characteristic of a coating film.

At least one polarizing plate of the first polarizing plate 120-1 and the second polarizing plate 120-2 may include a polarizer and one or more protective layers formed on one surface of the polarizer, and each protective layers may include one or more first optical functional films 122-1, 122-2 for complementing optical properties of the optical stack. Furthermore, the one or more protective layers may be provided on not only one surface of the polarizer, but also both surfaces, and may be formed in a double layer structure in which one or more protective layers are successively stacked. At this point, two different protective layers may be substantially equal or similar properties or different properties. Each protective layer may include a protective film preserving the polarization characteristic of the polarizer from a post-processing and external environment. Furthermore, the protective layer may serve to provide a structural base to allow the transparent conductive layer 130-1, 130-2 to be described below to be formed. Atthis point, the protective layer is preferably formed to have properties facilitating formation of the transparent conductive layer 130-1, 130-2.

According to an embodiment, at least one first optical functional film 122-1, 122-2 may be directly formed on one surface of the polarizer, or may be provided on an upper surface of a protective film.

According to an embodiment, at least one first optical functional film 122-1, 122-2 is not particularly limited as long as it can reinforce or complement the optical function of at least one polarizing plate of the first polarizing plate 120-1 and the second polarizing plate 120-2 and, for example, may be a retardation film such as a quarter-wave plate (1/4 wave plate), a half-wave plate (1/2 wave plate) in order to delay the phase of light passing through the liquid crystal layer 110, and these films may be used alone or in combination.

When the optical functional film is the retardation film, a value of in-plane retardation of the retardation film may be less than or equal to 100nm and, preferably, may be from 40nm to 60nm.

As the method for adjusting the in-plane retardation of the retardation film, methods commonly used in the industry can be applied, for example, when the retardation film is the polymer stretched film, a value of the in-plane retardation may be adjusted by adjusting material, thickness, stretching ratio, etc. In another embodiment, when the retardation film is a liquid crystal polymerized film, a value of the in-plane retardation may be adjusted by adjusting thickness, a double refractive value of the liquid crystal layer.

Furthermore, the retardation film may be produced to expressing an arbitrary thickness-directional retardation depending on an aligned state of a polymerized liquid crystal.

According to an embodiment, a thickness-directional retardation of the first optical functional film 122-1, 122-2 may be equal to or higher than 120nm and, preferably, may be a value from 120nm to 210nm.

Furthermore, according to an embodiment of the present disclosure, at least one polarizing plate of the first polarizing plate 120-1 and the second polarizing plate 120-2 may include a second optical functional film (not shown in the drawing) formed on one surface of at least one optical functional film of the first optical functional films 122-1 and 122-2. At this point, each optical functional film may be formed to have a preset in-plane retardation value or a preset thickens-directional retardation value. As an embodiment, a thickness-directional retardation of the second optical functional film may be formed such that a refractive index nx, ny, nz in an x, y, z direction of the polarizing plate or the retardation film meets the relationship of nx=ny≥nz. Furthermore, when the second optical functional film is a retardation film, the thickens-directional retardation value may be equal to or higher than 0nm and, particularly, may be from 0 to 120nm.

As the in-plane retardation value or the thickness-directional retardation value of the first optical functional film 122-1, 122-2 or the second optical functional film (not shown in the drawing) is formed as a preset value according to experimental data, it is possible to efficiently control not only light incident to a front surface thereof but also light incident to a slope, such as light of the sun. Furthermore, as the retardation film is designed as a preset value according to the above experimental data, when a voltage ratio in a light transmissive mode is applied, the transmittance can be sufficiently maintained, and when a voltage in a light blocking mode is applied, light such as light of the sun obliquely incident can be efficiently controlled.

Unless specifically specified otherwise when referring to the refractive index in this specification, the refractive index is a refractive index for light with a wavelength of about 550 nm.

The retardation film may be a polymer stretched film or a liquid crystal polymerized film, formed by stretching a polymer film that can impart optical anisotropy by stretching in an appropriate manner.

The description of the polymer stretched film may be equally applied to the protective film described later and, for example, the polymer stretched film may use a polymer layer including: polyolefin such as polyethylene (PE) or polypropylene (PP), etc.; cyclo olefin polymer (COP) such as polynorbornene, etc.; polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

An obtaining method of the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using common solvent, for example, solvent such as chloroform, 2 methylene chloride, and then is solidified in a cast dry manner, thereby cast-molding the non-stretched film.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, a biaxial stretched film may be manufactured by performing stretching in a sequential biaxial stretching method of roll stretching and tenter stretching, a simultaneous biaxial stretching method of tenter stretching, a biaxial stretching method of tubular stretching, etc.

The liquid crystal polymerized film may contain reactive liquid crystal compound in a polymerized state. The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with polymer network formed while being polymerized by light or heat and maintaining liquid crystal arrangement.

The reactive liquid crystal compound may be a mono-functional liquid crystal compound or a multi-functional liquid crystal compound. The mono-functional liquid crystal compound is a compound having 1 polymerizable functional group, and the multi-functional liquid crystal compound may mean a compound having two or more polymerizable functional groups.

A protective layer of at least one polarizing plate of the first polarizing plate 120-1 and the second polarizing plate 120-2 may comprise a protective film for preserving the polarization characteristic of the polarizer from a post-processing and external environment. According to one or a plurality of embodiments, the protective film may include the identical, similar, or different substances to or from the above-described optical functional film, and the protective film may include one or more types selected from a group consisting of polyester resin such as polyethylene terephthalate (PET), polyethylene isophthalate (PEI), polyethylene naphthalate (PEN), polybutylene terephthalate (PBT), etc.; cellulose resin such as diacetyl cellulose, triacetyl cellulose (TAC), etc.; polycarbonate (PC) resin; polyethylene (PE) resin; polypropylene (PP) resin; acrylic resin such as polymethyl acrylate (PMA), polymethyl methacrylate (PMMA), polyethyl acrylate (PEA), polyethyl methacrylate (PEMA), etc.; and cyclic olefin polymer (COP).

Furthermore, at least one polarizing plate of the first polarizing plate 120-1 and the second polarizing plate 120-2 may be formed with a member having orientation. For example, the polarizing plate 120 may be formed by coating and hardening composition for alignment film coating containing aligned polymers, photopolymerization initiators, and solvent on each protective layer to form the member having orientation, then by coating and curing the composition for liquid crystal coating on the member. Although the aligned polymer is not particularly limited, the aligned polymer may be polyacrylate-based resin, polyamic resin, polyimide-based resin, polymer having cinnamate groups, etc. and may use polymer capable of expressing orientation, the polymer being currently developed or to be developed.

According to an embodiment, at least one polarizing plate of the first polarizing plate 120-1 and the second polarizing plate 120-2 may include an overcoat layer. For example, the overcoat layer may be located on an upper surface of a layer formed by the composition for liquid crystal coating and may be provided to face the member having the orientation. According to some embodiments, a protective film may be additionally provided on an upper surface of the overcoat layer. In this case, the polarizing plate may have a stack structure of a member having the characteristic of the alignment film-a layer formed by the composition for liquid crystal coating-an overcoat layer-a protective film. Accordingly, the mechanical durability can be further improved while maintaining the transmittance at a constant level.

According to an embodiment, at least one polarizing plate of the first polarizing plate 120-1 and the second polarizing plate 120-2 may have a thickness ranging from 30 to 200 µm, and preferably, a thickness ranging from 30 to 170 µm, and more particularly, a thickness ranging from 50 to 150 µm. In this case, while at least one polarizing plate of the first polarizing plate 120-1 and the second polarizing plate 120-2 maintains the optical characteristic, the optical stack having a thin thickness can be manufactured.

At least one polarizing plate of the first polarizing plate 120-1 and the second polarizing plate 120-2 may have an incurvate shape in order to manufacture the optical stack having a curved surface, and for example, may be formed to be curved towards either of two different polarizing plates 120-1 and 120-2 that are stacked on both surfaces of the liquid crystal layer 110.

The transparent conductive layer 130-1, 130-2 may include the first transparent conductive layer 130-1 provided on one surface of the first polarizing plate 120-1 and the second transparent conductive layer 130-2 provided on one surface of the second polarizing plate 120-2. At this point, when each of the first polarizing plate 120-1 and the second polarizing plate 120-2 includes one or more optical functional films, the first optical functional film 122-1, 122-2 or the second optical functional film (not shown in the drawing) may be located between the first, second transparent conductive layer 130-1, 130-2 and the first, second polarizing plate 120-1, 120-2, respectively.

At least one transparent conductive layer of the first transparent conductive layer 130-1 and the second transparent conductive layer 130-2 may be formed by directly contacting with at least one polarizing plate of the first polarizing plate 120-1 and the second polarizing plate 120-2 and, for example, the first transparent conductive layer 130-1 may be formed by directly contacting with the first polarizing plate 120-1, and/or the second transparent conductive layer 130-2 may be formed by directly contacting with the second polarizing plate 120-2.

According to an embodiment, the first transparent conductive layer 130-1 or the second transparent conductive layer 130-2 formed by directly contacting with at least one polarizing plate of the first polarizing plate 120-1 and the second polarizing plate 120-2 may mean formation thereof on the polarizing plate without a separate or additional substrate, while sharing a contact surface with at least one polarizing plate of the first polarizing plate 120-1 and the second polarizing plate 120-2. For example, the first transparent conductive layer 130-1 or the second transparent conductive layer 130-2 may be formed by being deposited on an upper surface of a protective layer formed on at least one polarizing plate of the first polarizing plate 120-1 and the second polarizing plate 120-2. At this point, in order to increase the adhesion with respect to at least one polarizing plate of the first polarizing plate 120-1 and the second polarizing plate 120-2, the first transparent conductive layer 130-1 or the second transparent conductive layer 130-2 may be formed by going through pre-processing such as corona processing or plasma processing on one surface of the polarizing plate, and then directly contacting with the surface of the polarizing plate to which the pre-processing is performed. The pre-processing is not limited to the corona processing or the plasma processing, and may be a pre-processing currently developed or to be developed without harming the purpose of the present disclosure.

According to another embodiment of the present disclosure, the first transparent conductive layer 130-1 or the second transparent conductive layer 130-2 formed by directly contacting with at least one polarizing plate of the first polarizing plate 120-1 and the second polarizing plate 120-2 may be formed by directly contacting with the polarizing plate while a highly adhesive layer (not shown in the drawing) provided at one surface of the polarizing plate being located therebetween, in order to increase adhesion with respect to the polarizing plate.

At least one transparent conductive layer of the first transparent conductive layer 130-1 and the second transparent conductive layer 130-2 preferably have a transmittance of 50% or more for visible light, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous material may include one or more types selected from a group consisting of carbon nanotube (CNT), graphene, etc. The conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, at least one transparent conductive layer of the first transparent conductive layer 130-1 and the second transparent conductive layer 130-2 may be formed in a structure of two or more layers in combination of the above-described substances. For example, in order to reduce the reflectance of incident light and increase the transmittance, the transparent conductive layer 130 may be formed in a structure of two layers including a metal layer and a transparent conductive oxide.

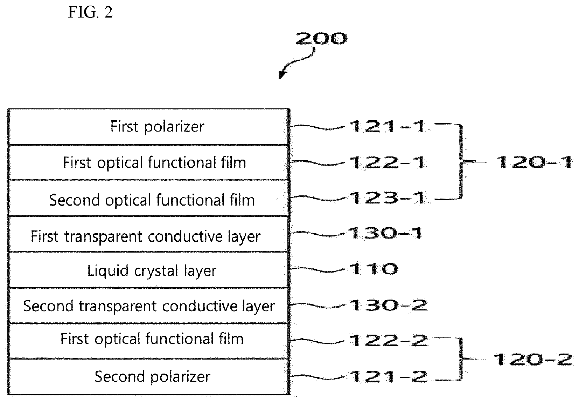

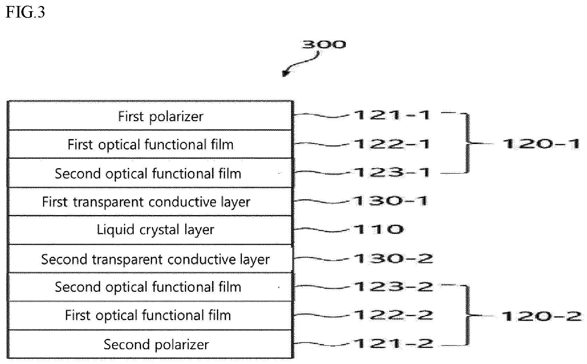

FIGS. 2 and 3 are views each showing a stack structure of a variable transmittance optical stack to which an optical film is coupled according to another embodiment of the present disclosure.

At least one polarizing plate of the first polarizing plate 120-1 and the second polarizing plate 120-2 may include a polarizer and a plurality of optical functional films provided on one surface of the polarizer, The plurality of optical functional films may be provided on both surfaces of the polarizer or may be formed in a double layer structure in which the optical functional films are successively stacked. At this point, the different optical functional films may have substantially the same or similar properties or different properties, and may be formed to have an in-plane retardation value or a thickness-directional retardation value defined advance.

According to an embodiment of FIG. 2, the variable transmittance optical stack 200 may include the first optical functional film 122-1, 122-2 between the polarizer 121-1, 121-2 and the transparent conductive layer 130-1, 130-2, and a second optical functional film 123-1 may be provided as a double layer structure in which the second optical functional film 123-1 is formed on a lower surface of the first optical functional film 122-1 located between the first polarizer 121-1 and the first transparent conductive layer 130-1. Furthermore, according to an embodiment of FIG. 3, the variable transmittance optical stack 300 may have a second optical functional film 123-2 may be provided as a double layer structure in which the second optical functional film 123-2 is formed on an upper surface of the first optical functional film 122-2 located between the second polarizer 121-2 and the second transparent conductive layer 130-2. According to the embodiment of FIG. 2 or 3, one or more first optical functional films 122-1, 122-2 and second optical functional films 123-1, 123-2 may have substantially identical or similar properties or different properties, and may have an in-plane retardation value or a thickness-directional retardation value defined in advance. According to an embodiment, the first optical functional film 122-1, 122-2 may have an in-plane retardation Rᵢₙ from 40nm to 100nm, and has a thickness-directional retardation Rₜₕ from 120nm to 210nm. The second optical functional film 123-1, 123-2 may be formed such that a refractive index nx, ny, nz with respect to an x, y, z direction of the polarizing plate meets the relationship of nx=ny≥nz, or may have a thickness-directional retardation Rₜₕ from 0 to 120nm.

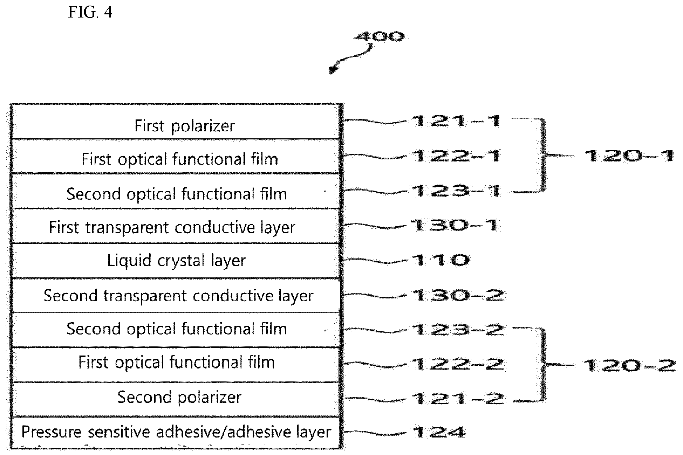

FIG. 4 is a view showing a stack structure of a variable transmittance optical stack in which a pressure sensitive adhesive/adhesive according to another embodiment of the present disclosure is formed on one surface thereof. According to the embodiment of FIG. 4, the pressure sensitive adhesive/adhesive layer may be provided on one surface of the optical stack 400.

The pressure sensitive adhesive/adhesive layer 124 may be formed using an adhesive or a pressure sensitive adhesive, and have appropriate pressure sensitive adhesion/adhesion to prevent peeling, bubbles, etc. from occurring when handling the optical stack 400, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, photopolymerization initiators, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiators may absorb light energy to generate radicals or cations to initiate photopolymerization, and a proper type may be selected and used depending on photopolymerization resin.

The pressure sensitive adhesive may use a pressure sensitive adhesive currently developed or to be developed. According to one or a plurality of embodiments, as the pressure sensitive adhesive, acrylic-based pressure sensitive adhesive, rubber-based pressure sensitive adhesive, silicon-based pressure sensitive adhesive, urethane-based pressure sensitive adhesive, polyvinyl alcohol-based pressure sensitive adhesive, polyvinyl pyrrolidone-based pressure sensitive adhesive, polyacrylamide-based pressure sensitive adhesive, cellulose-based pressure sensitive adhesive, vinylalkyl ether-based pressure sensitive adhesive and the like. The pressure sensitive adhesive is not particularly limited as long as it has pressure sensitive adhesion and viscoelasticity. For ease of acquisition, preferably, the pressure sensitive adhesive may include acrylic-based pressure sensitive adhesive, for example, may be (meth) acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably include polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer may be appropriately determined depending on a type of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness ranging from 0.01µm to 50µm in order to ensure sufficient adhesion and minimize the thickness of the optical stack and, preferably, may have a thickness ranging from 0.05µm to 20µm and, more preferably, may have a thickness ranging from 0.1µm to 10µm.

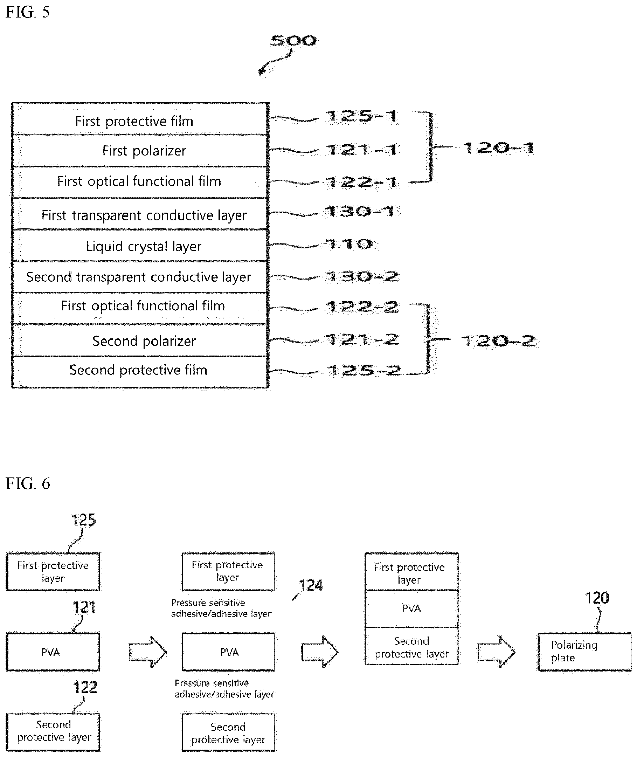

FIG. 5 is a view showing a stack structure of a variable transmittance optical stack to which a protective film is coupled according to another embodiment of the present disclosure. According to the embodiment of FIG. 5, the first polarizing plate 120-1 includes the first polarizer 121-1, the first optical functional film 122-1, and a first protective film 125-1, and the second polarizing plate 120-2 may include the second polarizer 121-2, the first optical functional film 122-2, and a second protective film 125-2. The first protective film 125-1 or the second protective film 125-2 may be provided to preserve polarization characteristics of the polarizer from a post-processing and external environment.

According to one or a plurality of embodiments, the protective film 125-1, 125-2 may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

FIG. 6 is a view schematically showing steps of forming a polarizing plate according an embodiment of the present disclosure. According to the embodiment of FIG. 6, the polarizing plate 120 may include the polyvinyl alcohol (PVA) 121 that is a polarizer, the first protective layer 125, and the second protective layer 122. The PVA 121 located at a center portion of the polarizing plate 120 is made of a material adjusting color implementation, and a direction and penetration of light, and may be provided as an embodiment of the polarizer mentioned above. The first protective layer 125 is provided to protect the PVA 121, and is provided as an embodiment of the protective layer mentioned above. At this point, the description of the protective film described above may be applied to the first protective layer 125 and, for example, may use cellulose triacetate (TAC), and the like Furthermore, the second protective layer 122 may be provided as an embodiment of the above-described retardation film that is the optical functional film. At this point, the description of the retardation film described above may be applied to the second protective layer 122 and, for example, may use cyclic olefin polymer (COP), and the like. Furthermore, the first protective layer 125 and the second protective layer 122 may be coupled to the PVA 121 by using the pressure sensitive adhesive/adhesive 124. The pressure sensitive adhesive/adhesive 124 is not particularly limited as long as it has appropriate pressure sensitive adhesion/adhesion, transparency, and thermal stability and, for example, the pressure sensitive adhesive/adhesive 124 may be substantially the same as the pressure sensitive adhesive/adhesive 124 described above.

The bonding method of the PVA 121 and the first and second protective layers 125 and 122 by using the pressure sensitive adhesive/adhesive 124 may be performed by a bonding method commonly used in the art. For example, there may be provided a method in which a pressure sensitive adhesive/adhesive composition is applied to a bonding surface of the polarizer or the protective layer by using a flexibility method, a Mayer bar coating method, a Gravure coating method, a die coating method, a dip coating method, a spray coating method, etc., and then the polarizer or the protective layer is inserted into a niff roll, etc. to be bonded.

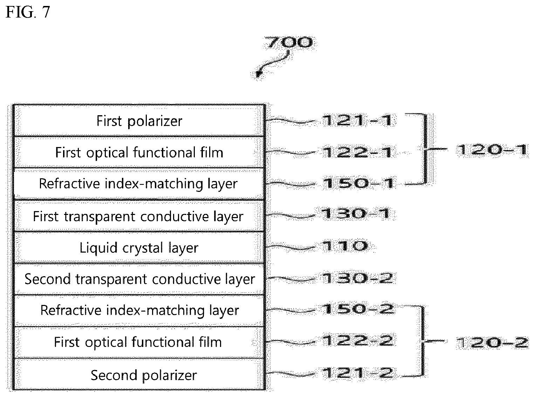

FIG. 7 is a stack structure of a variable transmittance optical stack to which a refractive index-matching layer is coupled according to another embodiment of the present disclosure. According to the embodiment of FIG. 7, the optical stack 700 may include the liquid crystal layer 110, the first polarizing plate 120-1, the second polarizing plate 120-2, the first transparent conductive layer 130-1, and the second transparent conductive layer 130-2. The first polarizing plate 120-1 may include the first polarizer 121-1, the first optical functional film 122-1, and a refractive index-matching layer 150-1, and the second polarizing plate 120-2 may include the second polarizer 121-2, the first optical functional film 122-2, and a refractive index-matching layer 150-2.

The refractive index-matching layer 150-1, 150-2 is provided to compensate for a transmittance difference of the optical stack by the first transparent conductive layer 130-1 or the second transparent conductive layer 130-2, and may serve to improve the visible characteristic by reducing the difference of the refractive index. Furthermore, the refractive index-matching layer 150-1, 150-2 may be provided to correct a color based on the first transparent conductive layer 130-1 or the second transparent conductive layer 130-2. Meanwhile, when the first transparent conductive layer 130-1 or the second transparent conductive layer 130-2 has a pattern, the refractive index-matching layer 150-1, 150-2 may correct the transmittance difference between a region with the pattern and a non-pattern region without the pattern.

Specifically, the first transparent conductive layer 130-1 or the second transparent conductive layer 130-2 is stacked close to other members having a refractive index different therefrom, and due to the difference of the refractive index between the transparent conductive layer 130 and another layer close thereto, the difference of optical transmittance may be caused. Specifically, when a pattern is formed on the first transparent conductive layer 130-1 or the second transparent conductive layer 130-2, a problem in that the pattern region and the non-pattern region are visually distinguished from each other. Therefore, the refractive index-matching layer 150-1, 150-2 is located between the polarizer 121-1, 121-2 and the first transparent conductive layer 130-1 or the second transparent conductive layer 130-2 so as to compensate the refractive index. According to the embodiment of FIG. 7, the optical stack 700 is formed such that the first optical functional film 122-1, 122-2 and the refractive index-matching layer 150-1, 150-2 are successively stacked in the double layer structure on the polarizer 121-1, 121-2, but locations of the optical function film and the refractive index-matching layer 150-1, 150-2 may be variously formed by a stacking method commonly used in the art, including when the second optical functional film is provided.

Furthermore, according to the embodiment the present disclosure, a manufacturing method for the optical stack 700 may be configured such that the refractive index-matching layer 150-1, 150-2 is formed on the polarizer 121-1, 121-2 with the first optical functional film 122-1, 122-2 and then the transparent conductive layer 130-1, 130-2 is stacked thereon. The refractive index-matching layer 150-1, 150-2 may compensate the transmittance difference of the optical stack, and is not particularly limited as long as it compensates a color based on the transparent conductive layer 130-1, 130-2. Furthermore, the refractive index-matching layer 150-1, 150-2 may be formed on the protective layer of the polarizer 121-1, 121-2.

Furthermore, the refractive index-matching layer 150-1, 150-2 reduces the transmittance difference of the optical stack and, specifically, when a pattern is formed on the first transparent conductive layer 130-1 or the second transparent conductive layer 130-2, the pattern region and the non-pattern region should be provided so as not to be visually distinguished.

The refractive index of the refractive index-matching layer 150-1, 150-2 may be preset to be greater than the refractive index of the protective layer included in the polarizing plate 120-1, 120-2, and to be less than or equal to the refractive index of the transparent conductive layer 130-1, 130-2. The refractive index may be properly selected depending on materials of the polarizing plate 120-1, 120-2 and the transparent conductive layer 130-1, 130-2, but it is preferable that refractive index is a value from 1.4 to 2.6, and more preferably, may be a value from 1.4 to 2.4. As described above, as the refractive index-matching layer 150-1, 150-2 is preset as a preset refractive index, optical loss due to a sharply refractive difference between the polarizing plate 120-1, 120-2 and the transparent conductive layer 130-1, 130-2 can be prevented. The refractive index-matching layer 150-1, 150-2 is not particularly limited as long as it can prevent the sharply refractive difference between the polarizing plate 120-1, 120-2 and the transparent conductive layer 130-1, 130-2. For example, the refractive index-matching layer 150-1, 150-2 may be formed from refractive index-matching layer formation composition including polymerizable isocyanurate compound.

The refractive index-matching layer 150-1, 150-2 may be stacked-formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

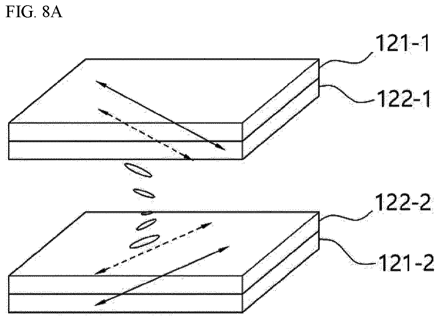

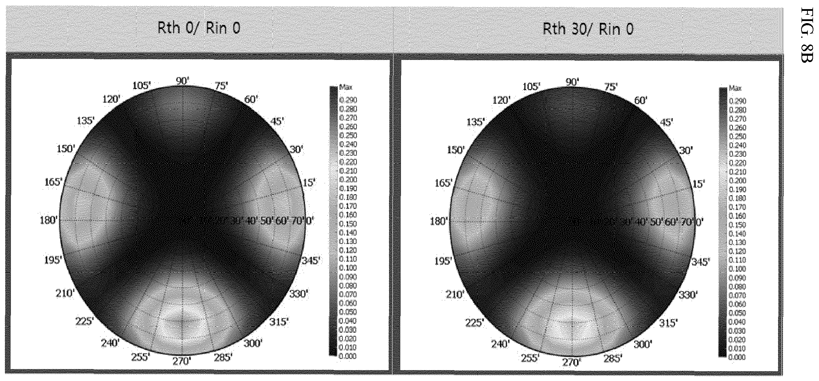

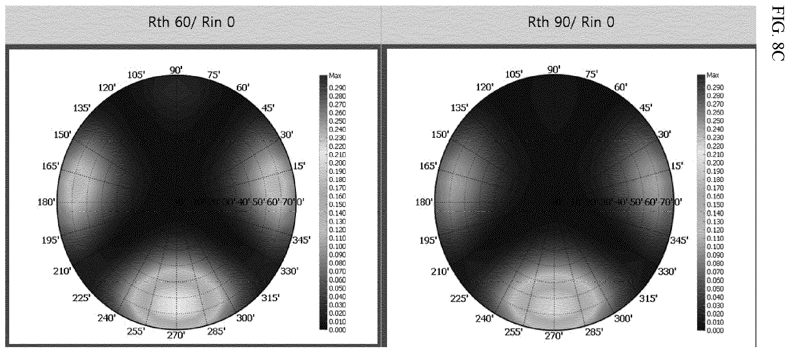

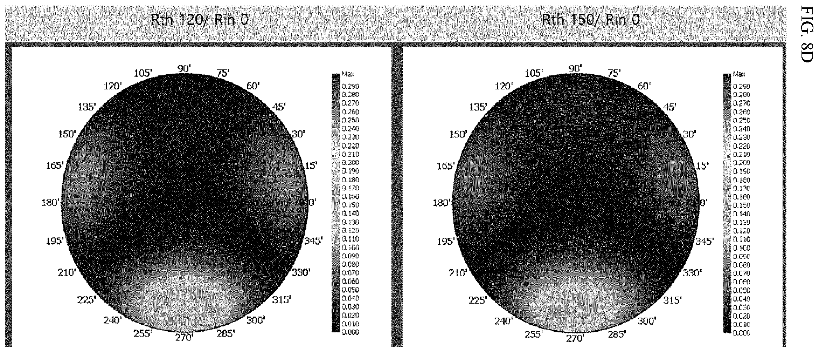

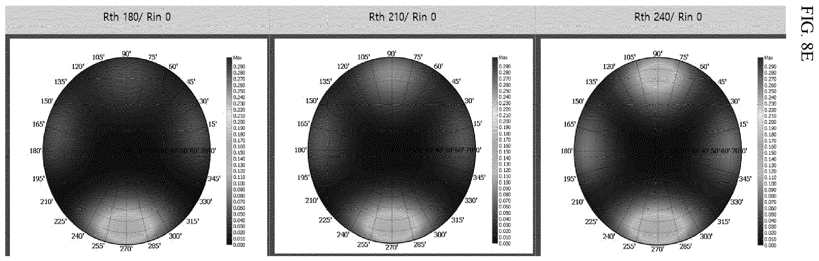

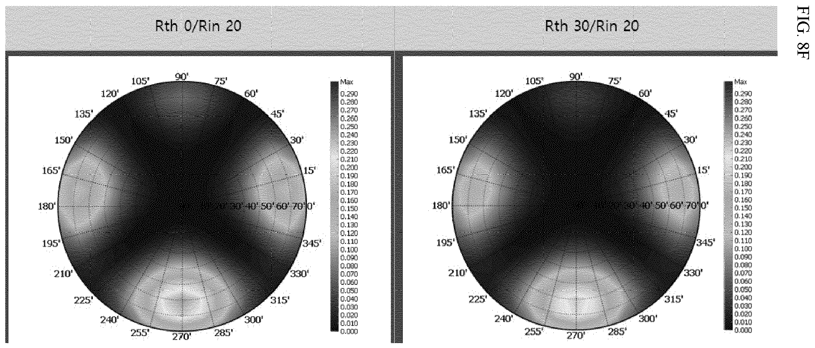

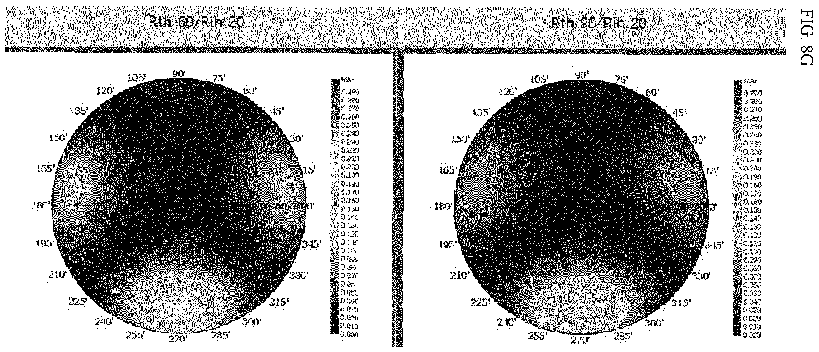

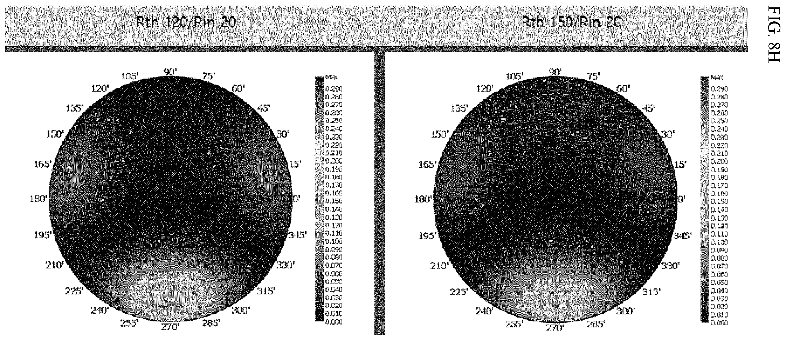

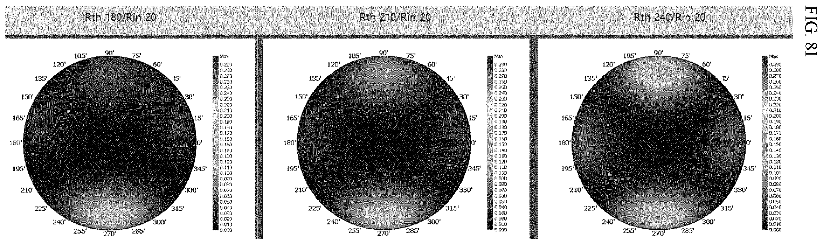

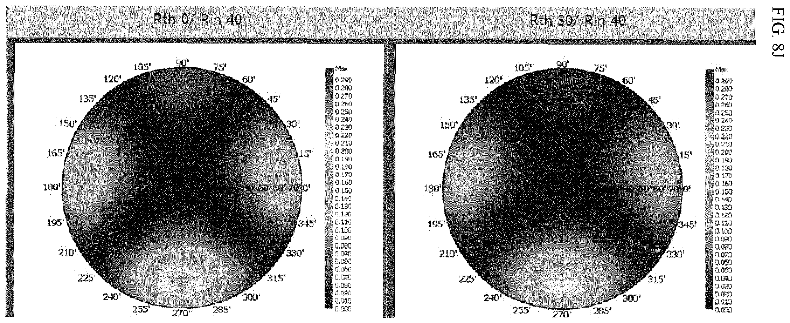

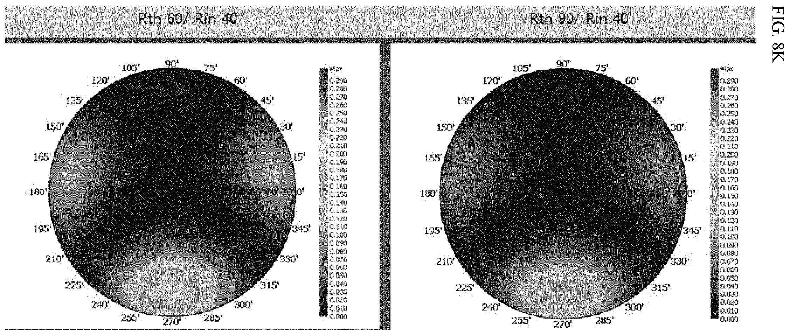

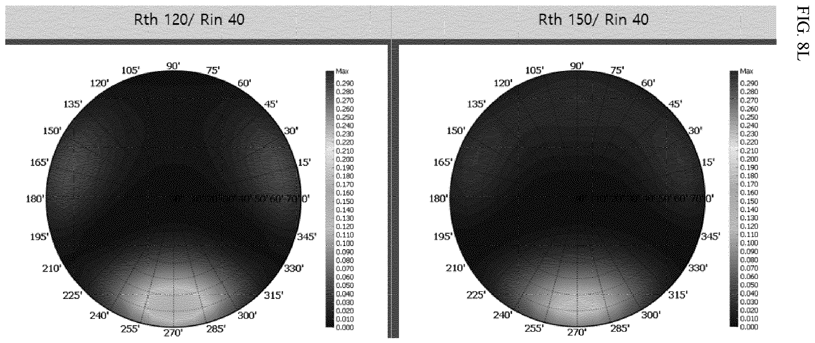

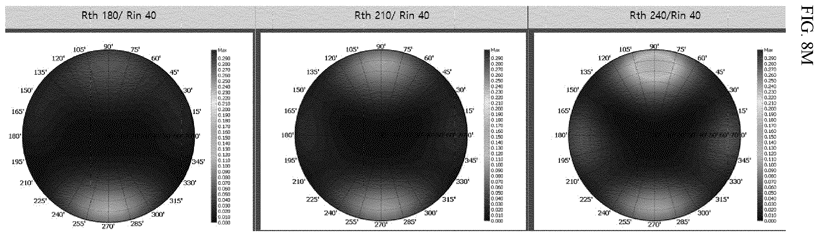

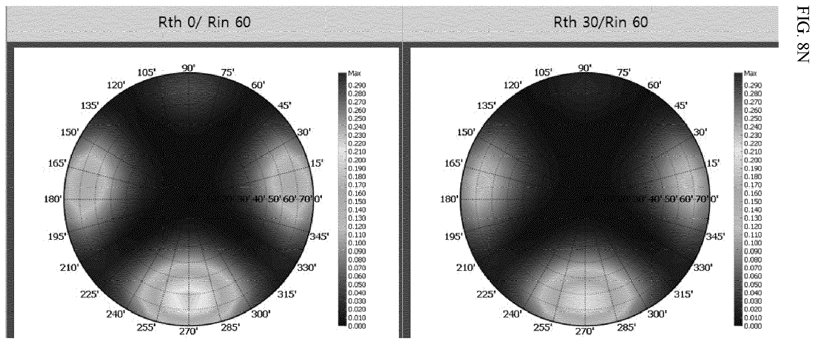

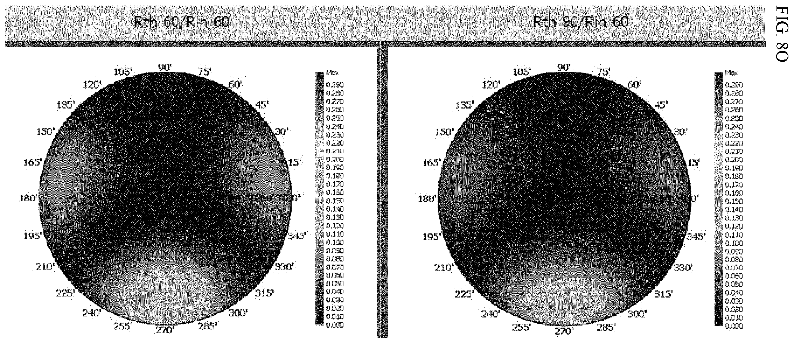

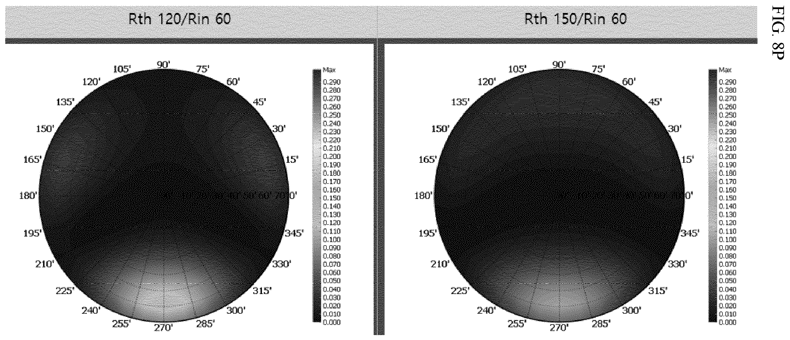

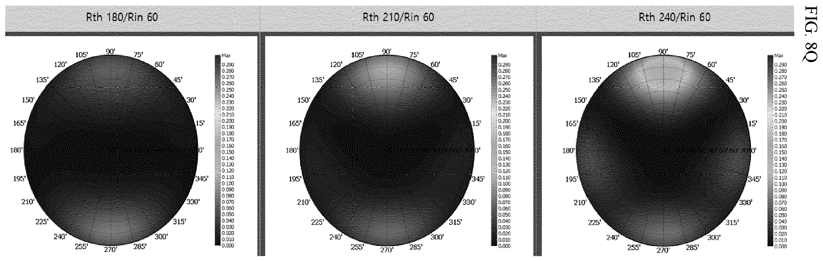

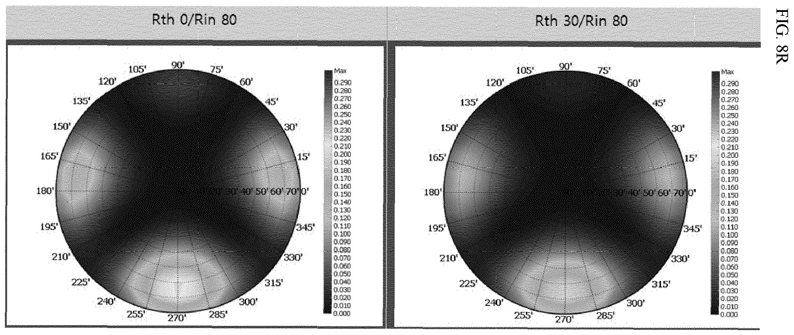

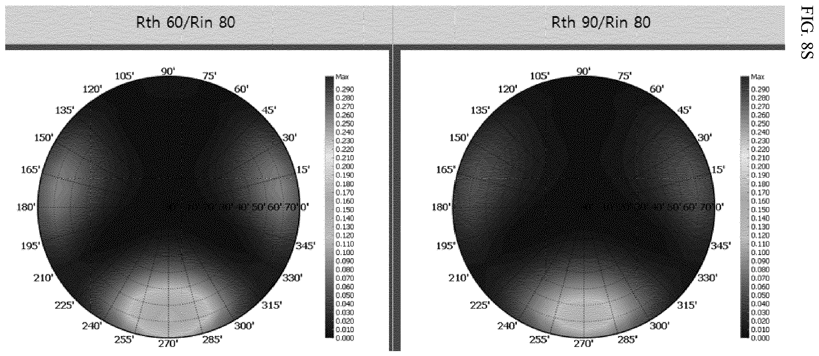

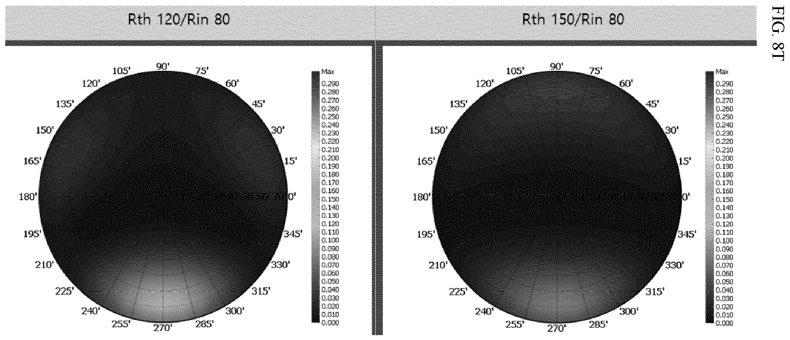

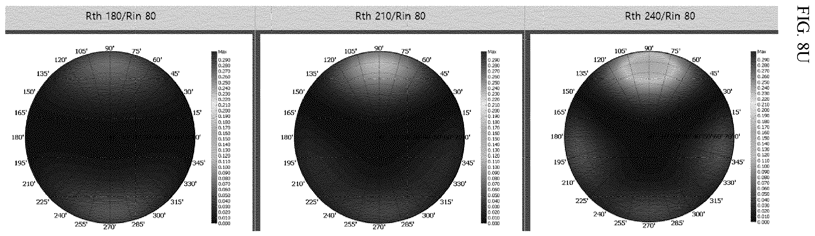

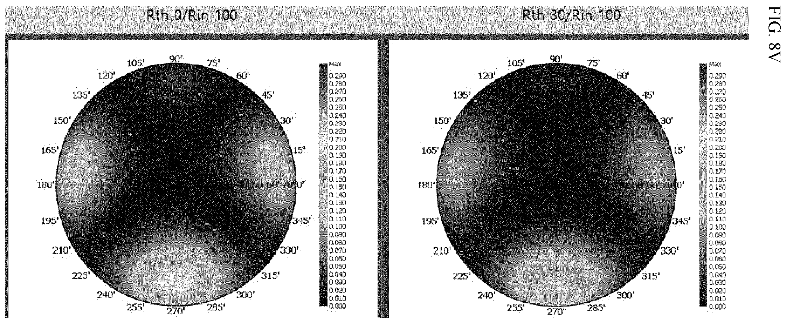

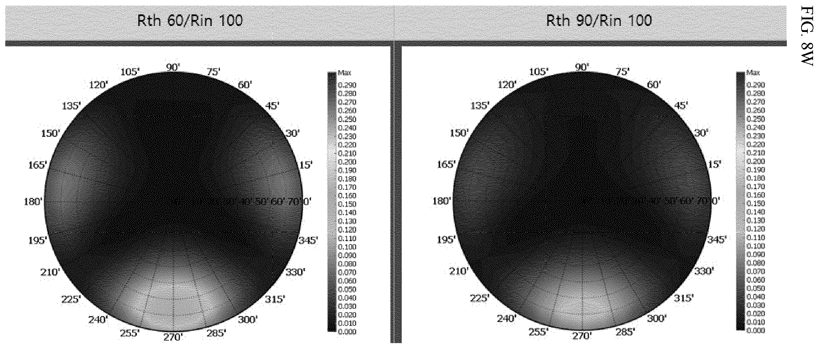

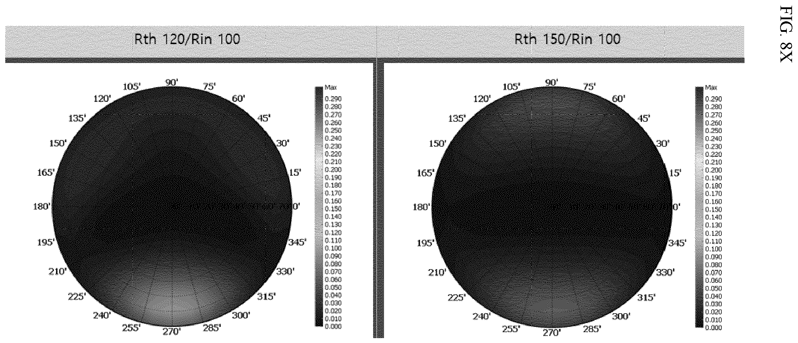

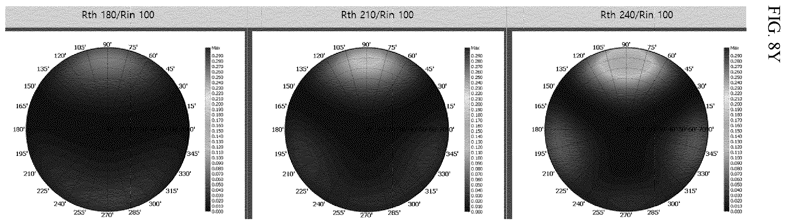

FIG. 8 is a view showing light leakage test process and result of a variable transmittance optical stack according to a first optical functional film according to an embodiment of the present disclosure. Referring to FIG. 8A, the first optical functional film 122-1 is stacked on the first polarizer 121-1, and the different first optical functional film 122-2 is stacked on the second polarizer 121-2, and the retardation film is used as the first optical functional film 122-1, 122-2. At this point, the two first optical functional films 122-1 and 122-2 are designed to have the same retardation. Results of measuring light leakage while changing a value of the in-plane retardation Rᵢₙ and a value of the thickness-directional retardation Rₜₕ of each of the first optical functional films are shown in FIGS. 8B to 8Y.

According to the results of FIGS. 8B to 8Y, the leakage of light passing through the variable transmittance optical stack can be efficiently blocked in a range with the in-plane retardation Rᵢₙ from 40nm to 100nm and a range with the thickness-directional retardation Rₜₕ from 120nm to 210nm. Therefore, as the in-plane retardation and the thickness-directional retardation are adjusted, transmitted light can be efficiently controlled.

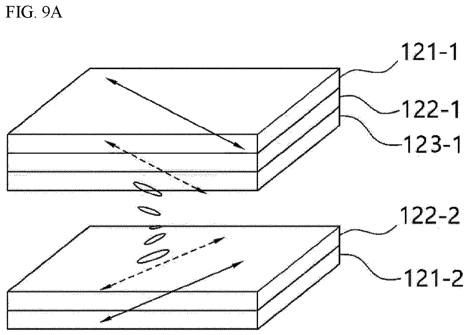

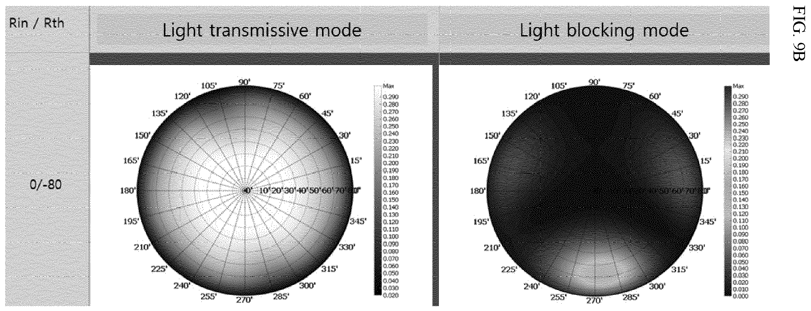

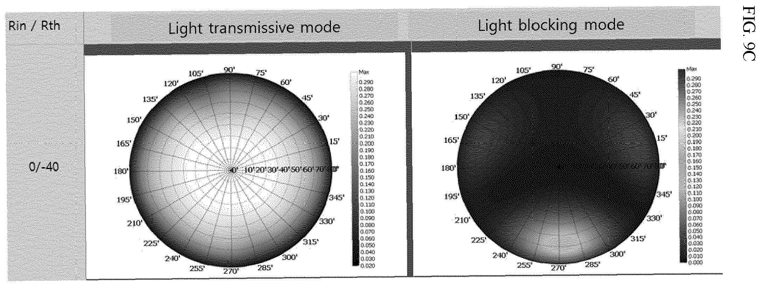

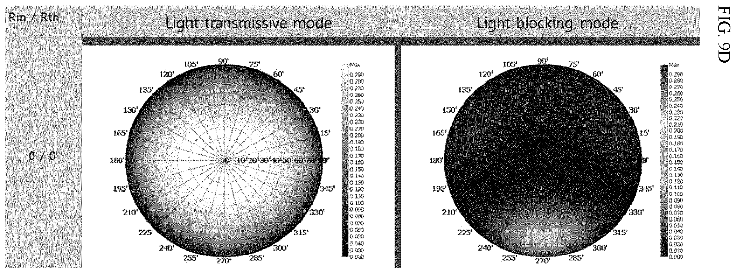

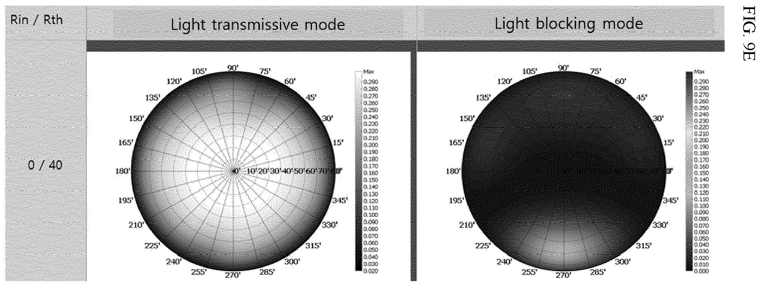

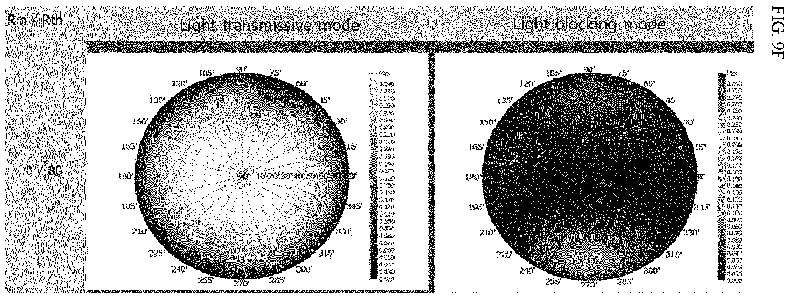

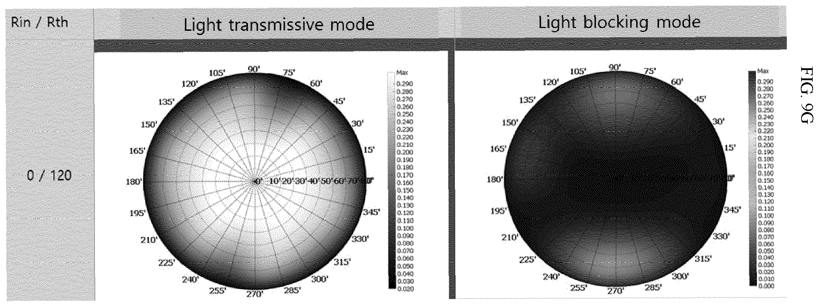

FIG. 9A is a view showing light leakage test process and result of a variable transmittance optical stack according to a first optical functional film and a second optical functional film according to an embodiment of the present disclosure. Referring to FIG. 9A, the first optical functional film 122-1 and the second optical functional film 123-1 are stacked on the first polarizer 121-1, and the different first optical functional film 122-2 is stacked on the second polarizer 121-2, and the retardation film is used as the first, second optical functional film 122-1, 122-2, 123-1. At this point, as the two first optical functional films 122-1 and 122-2, retardation films within the range with the in-plane retardation Rᵢₙ from 40nm to 100nm and the range with the thickness-directional retardation Rₜₕ from 120nm to 210nm, that are the appropriate ranges shown in the embodiment of FIG. 8, are used. In a state in which the retardation value of the first optical functional film 122-1, 122-2 is fixed, results of light leakage are measured while the thickness-directional retardation of the second optical functional film 123-1. At this point, measured results while changing voltage application are shown in FIGS. 9B to 9G. At this point, the in-plane retardation of the second optical functional film 123-1 is fixed to 0 or more. According to the results of FIGS. 9B to 9G, the variable transmittance optical stack according to the embodiment of the present disclosure is not largely changed in a light transmittance in a first experimental condition where a voltage is not applied (0V, i.e., the light transmissive mode). However, in a second experimental condition where a voltage is applied (5V, i.e., the light blocking mode), leakage of light passing through the variable transmittance optical stack in the range with the thickness-directional retardation of the second optical functional film 123-1 from 0 of 120nm can be efficiently blocked.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

### Industrial Applicability

The variable transmittance optical stack according to the present disclosure does not include a separate or additional substrate for forming the conductive layer as the conductive layer is directly formed on one surface of the polarizing plate, so that the thickness thereof may be significantly reduced in comparison to the thickness of the conventional optical stack.

## Claims

1. A variable transmittance optical stack comprising:
a first polarizing plate;
a first transparent conductive layer provided on one surface of the first polarizing plate;
a second polarizing plate opposing the first polarizing plate;
a second transparent conductive layer provided on one surface of the second polarizing plate, and opposing the first transparent conductive layer; and
a liquid crystal layer provided between the first transparent conductive layer and the second transparent conductive layer,
wherein the liquid crystal layer is driven in a twisted nematic (TN) mode,
wherein at least one transparent conductive layer of the first transparent conductive layer and the second transparent conductive layer is formed by directly contacting with the first polarizing plate or the second polarizing plate,
at least one polarizing plate of the first polarizing plate and the second polarizing plate includes a polarizer and a first optical functional film provided on one surface of the polarizer,
wherein the first optical functional film has an in-plane retardation (Rᵢₙ) from 40nm to 100nm, and a thickness-directional retardation (Rₜₕ) from 120nm to 210nm.

2. The variable transmittance optical stack of claim 1, further comprising:
a second optical functional film provided on one surface of the first optical functional film.

3. The variable transmittance optical stack of claim 2, wherein at least one optical functional film of the first optical functional film and the second optical functional film is a retardation film.

4. The variable transmittance optical stack of claim 2, wherein the second optical functional film has a refractive index nx, ny, nz in an x, y, z axial direction that meets a relationship of nx=ny≥nz.

5. The variable transmittance optical stack of claim 2, wherein the second optical functional film has a thickness-directional retardation (Rₜₕ) from 0 to 120nm.

6. The variable transmittance optical stack of claim 1, wherein at least one transparent conductive layer of the first transparent conductive layer and the second transparent conductive layer is formed by directly contacting with the first polarizing plate or the second polarizing plate without a separate or additional substrate between the polarizing plate and the transparent conductive layer.

7. The variable transmittance optical stack of claim 1, wherein at least one transparent conductive layer of the first transparent conductive layer and the second transparent conductive layer further comprises a highly adhesive layer between the first polarizing plate or the second polarizing plate and the transparent conductive layer.

8. The variable transmittance optical stack of claim 1, wherein at least one polarizing plate of the first polarizing plate and the second polarizing plate further comprises at least one protective film.

9. The variable transmittance optical stack of claim 8, wherein the protective film comprises one or more types selected from a group consisting of polyethylene terephthalate, polyethylene isophthalate, polyethylene naphthalate, polybutylene terephthalate, diacetyl cellulose, triacetyl cellulose, polycarbonate, polyethylene, polypropylene, polymethyl acrylate, polymethyl methacrylate, polyethyl acrylate, polyethyl methacrylate, and cyclic olefin polymer.

10. The variable transmittance optical stack of claim 1, wherein at least one polarizing plate of the first polarizing plate and the second polarizing plate has a thickness from 30µm to 200µm.

11. The variable transmittance optical stack of claim 1, wherein at least one transparent conductive layer of the first transparent conductive layer and the second transparent conductive layer comprises one or more types selected from a group consisting of transparent conductive oxide, metal, carbonaceous materials, conductive polymers, conductive ink, and nanowires.

12. The variable transmittance optical stack of claim 1, wherein the liquid crystal layer comprises one or more types selected from a group consisting of a ball spacer and a column spacer.

13. The variable transmittance optical stack of claim 12, wherein the ball spacer has a diameter from 1µm to 10µm.

14. The variable transmittance optical stack of claim 12, wherein an occupancy area of the ball spacer in the liquid crystal layer is from 0.01% to 10% of the area of the liquid crystal layer.

15. The variable transmittance optical stack of claim 1, further comprising:
a refractive index-matching layer having a refractive index from 1.4 to 2.6.

16. A manufacturing method for the variable transmittance optical stack of any one of claims 1 to 15.

17. A smart window comprising the variable transmittance optical stack of any one of claims 1 to 15.

18. A vehicle in which the smart window of claim 17 is applied to at least one of a front window, a rear window, a side window, a sunroof window, and an inner partition thereof.

19. A window and a door of a building, the window and the door comprising the smart window of claim 17.
